# EUROPEAN PATENT SPECIFICATION

(11) **EP 4 574 257 B1**
(45) Date of publication and mention of the grant of the patent: **06.05.2026**
(21) Application number: 23874552.5
(22) Date of filing: 24.08.2023
(51) Int. Cl.: B01D 53/94, B01J 35/57, B01J 23/02, B01J 23/63, B01J 35/00, F01N 3/08, F01N 3/28

(54) **CATALYST FOR EXHAUST GAS PURIFICATION**
KATALYSATOR ZUR ABGASREINIGUNG
CATALYSEUR DESTINÉ À L'ÉPURATION DE GAZ D'ÉCHAPPEMENT

(30) Priority: 06.10.2022 JP 2022161921
(43) Date of publication of application: 25.06.2025
(73) Proprietor: CATALER CORPORATION, Kakegawa-shi, Shizuoka 437-1492 (JP)
(72) Inventor: TAKASU, Ryosuke, Kakegawa-shi, Shizuoka 437-1492 (JP); ONOE, Ryota, Kakegawa-shi, Shizuoka 437-1492 (JP); OHASHI, Tatsuya, Kakegawa-shi, Shizuoka 437-1492 (JP); ITO, Masaya, Kakegawa-shi, Shizuoka 437-1492 (JP); ONOHARA, Yu, Kakegawa-shi, Shizuoka 437-1492 (JP)
(74) Representative: Kramer Barske Schmidtchen Patentanwälte PartG mbB
(86) International application number: PCT/JP2023/030440
(87) International publication number: WO 2024/075420

(56) References cited:
- WO-A1-2021/198680
- JP-A- 2017 501 032
- JP-A- 2018 143 935
- JP-A- 2018 199 094
- JP-A- 2022 075 041
- US-A1- 2008 044 329
- US-A1- 2016 199 816
- US-A1- 2018 311 649

## Description

### [Technical Field]

The present disclosure relates to a catalyst for exhaust gas purification. This application claims the benefit of priority to Japanese Patent Application No. 2022-161921 filed on October 6, 2022.

### [Background Art]

Exhaust gas emitted from internal combustion engines such as automobile engines contains harmful components such as hydrocarbons (HC), carbon monoxide (CO), and nitrogen oxides (NOₓ). Conventionally, catalysts for exhaust gas purification including a substrate and a catalyst layer containing a catalyst metal have been used to remove these harmful components. Exhaust gas supplied to the catalyst for exhaust gas purification comes into contact with the catalyst layer, thereby purifying the harmful components. For example, HC and CO in the exhaust gas are oxidized and converted (purified) to water (H₂O) and carbon dioxide (CO₂), while NOₓ in the exhaust gas is reduced and converted (purified) to nitrogen (N₂).

However, when an internal combustion engine is started, a catalyst for exhaust gas purification is not sufficiently warmed up, resulting in low activity of the catalyst metal. Consequently, with harmful components remaining unpurified, the exhaust gas may be emitted until the catalyst metal reaches its predetermined activation temperature. To address this, the air-fuel ratio (A/F) of an air-fuel mixture supplied at the startup of the internal combustion engine may be made more dilute, thus controlling the internal combustion engine to bring it into a lean (oxygen-rich) state, so-called lean start control, to reduce the amount of CO and HC. However, in a lean atmosphere, it is difficult to extract oxygen from NOₓ, posing a problem in purifying NOₓ.

Therefore, NOₓ storage-reduction (NSR: NOₓ Storage-Reduction) catalysts containing a NOₓ storage material are widely used to suppress NOₓ emissions in the warm-up process during the lean start control (see Patent Documents 1 and 2). For example, Patent Document 1 discloses an NSR catalyst including three catalyst layers, which are composed of a lower layer containing Pt and/or Pd, a middle layer containing Pt and/or Pd and a NOₓ storage material, and an upper layer containing Rh.

### [Citation List]

### [Patent Literature]

[Patent Document 1] Japanese Patent Application Publication No. 2018-143935
[Patent Document 2] Japanese Patent Application Publication No. 2016-93760

### [Summary of Invention]

In a catalyst layer containing a NOₓ storage material as disclosed in Patent Documents 1 and 2, a NOₓ storage reaction occurs in the lean atmosphere. That is, since NOₓ in the exhaust gas is essentially composed of NO, NO is generally first oxidized by the catalyst metal such as Pt to form NO₂. The NO₂ formed reacts with the NOₓ storage material (e.g., an alkaline earth metal) to form a nitrate, which is temporarily incorporated into the NOₓ storage material. Consequently, NOₓ emissions are suppressed. When the control is switched to a state between stoichiometric (theoretical air-fuel ratio) and rich (fuel-rich) atmospheres, inclusive, the NO₂ incorporated in the NOₓ storage material is desorbed from the catalyst layer and reduced on the catalyst metal using a reducing gas such as HC or CO as a reducing agent. Thus, NOₓ components in the exhaust gas are converted (purified) to nitrogen (N₂).

In recent years, emission regulations have become increasingly stringent. In addition, for example, in eco-cars equipped with energy-saving mechanisms, the engine, which is an internal combustion engine, may frequently repeat stopping and starting even during its operation. Therefore, a catalyst for exhaust gas purification including a NOₓ storage material is required to have further enhanced NOₓ storage performance in a lean atmosphere, i.e., to further reduce the amount of NOₓ emissions (emissions).

The inventors have proposed a different approach from conventional ones to enhance NOₓ storage performance in a lean atmosphere. More specifically, they have thought that the NOₓ storage performance in the lean atmosphere is enhanced by inducing the NOₓ storage reaction, especially the NO oxidation reaction, at an early stage.

That is, to cause the NOₓ storage reaction described above, it is necessary to oxidize NO, converting it into the state of NO₂. However, according to the inventors' study, when CO coexists with NO at this time, the oxidation reaction of CO occurs preferentially, thereby inhibiting the NO oxidation reaction. As a result, it has been found that the formation of NO₂ is less likely, causing a delay in inducing the NOₓ storage reaction.

CO is primarily purified by Pd. However, in a catalyst layer such as that disclosed in Patent Document 1, where the NOₓ storage material is contained in the middle layer and Pd is contained in the lower layer, CO tends to remain particularly in the middle layer, which easily inhibits the NO oxidation reaction. Therefore, the inventors have believed that in order to enhance the NOₓ storage performance in a lean atmosphere in the catalyst layer where the NOₓ storage material is contained in the middle layer while Pd is contained in the lower layer, it is important to quickly purify CO during the warm-up process to promote the NO oxidation reaction, thereby inducing the NOₓ storage reaction at an early stage. The present disclosure has been completed based on these findings.

A catalyst [1] for exhaust gas purification disclosed herein is suitable for purifying exhaust gas emitted from an internal combustion engine and is disposed in an exhaust passage of the internal combustion engine, the catalyst including a substrate and a catalyst layer formed on the substrate. The catalyst layer includes a lower layer located on a side of the substrate; an upper layer located on a surface layer side; and a middle layer located between the lower layer and the upper layer. The upper layer contains Rh. The middle layer contains at least Pt and a NOₓ storage material. The lower layer has a lower-layer front portion located on an upstream side in a flow direction of the exhaust gas and a lower-layer rear portion located on a downstream side in the flow direction of the exhaust gas, when the catalyst is disposed in the exhaust passage. The lower-layer front portion and the lower-layer rear portion each contain Pd. A Pd content (C_{F}) in the lower-layer front portion per L of the substrate is greater than a Pd content (C_{R}) in the lower-layer rear portion per L of the substrate.

In the catalyst [1] for exhaust gas purification, the lower layer containing Pd has the lower-layer front portion on the upstream side and the lower-layer rear portion on the downstream side. The Pd content (C_{F}) in the lower-layer front portion is greater than the Pd content (C_{R}) in the lower-layer rear portion. That is, C_{F} > C_{R} is satisfied. Normally, when starting an internal combustion engine, the exhaust gas tends to warm the catalyst layer from the lower-layer front portion. Thus, by increasing the Pd content in the lower-layer front portion, which is easily warmed at the startup (in other words, by biasing the Pd concentration toward the upstream side), a CO purification reaction can be induced actively. This enables CO to be purified quickly, making it difficult for the NO oxidation reaction to be inhibited. Therefore, the NO oxidation reaction can occur smoothly, thus inducing the NOₓ storage reaction at an early stage.

In addition, the reaction heat (heat capacity) during the CO purification reaction is transferred to the downstream side as the exhaust gas flows, thus enabling an improvement in the warming up of the entire catalyst layer. As a result, a catalyst metal can be quickly heated to an activation temperature (for example, 200 to 250°C). Therefore, the catalyst [1] for exhaust gas purification can enhance the NOₓ storage performance in a lean atmosphere, particularly when starting an internal combustion engine.

In a catalyst [2] for exhaust gas purification disclosed herein according to the catalyst [1] for exhaust gas purification, the ratio (C_{F}/C_{R}) of the C_{F} to the C_{R} satisfies the following formula: 1.5 ≤ (C_{F}/C_{R}) ≤ 3.0. Thus, the NOₓ purification performance in a stoichiometric to rich atmospheres can also be enhanced, so that NOₓ emissions can be reduced in a wide range of lean to rich atmospheres.

In a catalyst [3] for exhaust gas purification disclosed herein according to the catalyst [1] or [2] for exhaust gas purification, a total amount of Pd contained in the entire lower layer per L of the substrate is 3.0 g/L or less. In such a case, the application of the technology disclosed herein is particularly effective.

In a catalyst [4] for exhaust gas purification disclosed herein according to any one of the catalysts [1] to [3] for exhaust gas purification, the lower-layer front portion and the lower-layer rear portion each contain an OSC material having the oxygen storage capacity and a non-OSC material having no oxygen storage capacity, a content of the non-OSC material in the lower-layer front portion per L of the substrate is greater than a content of the non-OSC material in the lower-layer rear portion per L of the substrate, and a content of the OSC material in the lower-layer front portion per L of the substrate is smaller than a content of the OSC material in the lower-layer rear portion per L of the substrate. This enables excellent exhaust gas purification performance to be continuously demonstrated for a long time.

In a catalyst [5] for exhaust gas purification disclosed herein according to any one of the catalysts [1] to [4] for exhaust gas purification, a coating length of the lower-layer front portion in the flow direction of the exhaust gas is shorter than a coating length of the lower-layer rear portion in the flow direction of the exhaust gas. Thus, the effects of the technology disclosed herein can be demonstrated at a high level, thereby further enhancing the NOₓ storage performance in a lean atmosphere.

In a catalyst [6] for exhaust gas purification disclosed herein according to any one of the catalysts [1] to [5] for exhaust gas purification, the coating length of the lower-layer front portion in the flow direction of the exhaust gas is 30% or more and 60% or less of an entire length of the substrate, and the coating length of the lower-layer rear portion in the flow direction of the exhaust gas is 60% or more and 90% or less of the entire length of the substrate. This can stably achieve both the NOₓ purification performance in the lean atmosphere and the NOₓ purification performance in the stoichiometric to rich atmospheres at a high level.

### [Brief Description of Drawings]

FIG. 1 is a perspective view schematically illustrating a catalyst for exhaust gas purification according to one embodiment.
FIG. 2 is a partial cross-sectional view of the catalyst for exhaust gas purification of FIG. 1, taken along a cylinder axis direction.
FIG. 3 is a cross-sectional view schematically illustrating a configuration of a lower layer in Test I.
FIG. 4 is a graph showing a relationship between a ratio (C_{F}/C_{R}) of Pd content and a 50% CO purification time.
FIG. 5 is a graph showing a relationship between the ratio (C_{F}/C_{R}) of the Pd content and a NO storage start time.
FIG. 6 is a graph showing a relationship between the 50% CO purification time and the NO storage start time.
FIG. 7 is a graph showing a relationship between a total amount of Pd in the lower layer and the 50% CO purification time.
FIG. 8 is a graph showing a relationship between the total amount of Pd in the lower layer and the NO storage start time.

### [Description of Embodiments]

Hereinafter, preferred embodiments of the present disclosure will be described with reference to the accompanying drawings. Matters other than those specifically mentioned herein that are necessary for the implementation of the present disclosure (e.g., manufacturing methods for a general catalyst for exhaust gas purification) can be understood as matters of design by those skilled in the art based on the conventional technology in the field. The present disclosure can be implemented based on the contents disclosed herein and technical common sense in the field. In the following drawings, members and parts that have the same actions are denoted by the same symbols, and duplicated explanations thereof may be omitted or simplified. The dimensional relationships (length, width, thickness, etc.) in each drawing do not necessarily reflect the actual dimensional relationships. The notation "A to B" (A, B are arbitrary numerical values), which indicates a range herein, encompasses the meanings of "more than A (exceeding A)" and "smaller than B (less than B)", as well as the meaning of "A or more and B or less".

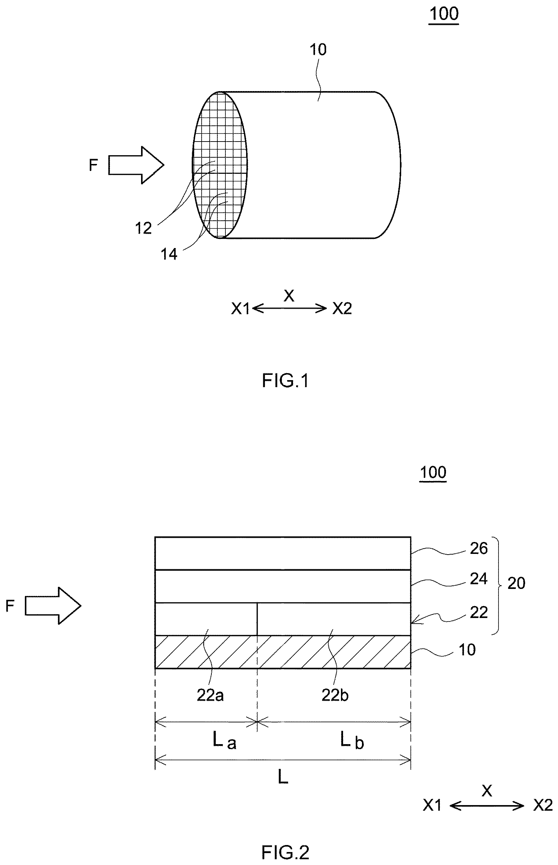

FIG. 1 is a schematic diagram of a catalyst 100 for exhaust gas purification. The catalyst 100 for exhaust gas purification is suitable for purifying exhaust gas emitted from an internal combustion engine, and it is disposed in an exhaust passage of the internal combustion engine. The catalyst 100 for exhaust gas purification has a substrate 10 and a catalyst layer 20 (see FIG. 2) formed on the substrate 10. In FIG. 1 and the like, an arrow F indicates the flow direction of exhaust gas when the catalyst 100 is disposed in the exhaust passage. An arrow X indicates a cylinder axis direction of the substrate 10. X1 indicates an upstream side (front side) in the flow direction F of the exhaust gas, and X2 indicates a downstream side (rear side) in the flow direction F of the exhaust gas.

The catalyst 100 for exhaust gas purification can be disposed in exhaust systems (exhaust pipes) of various internal combustion engines, especially automobile engines, by appropriately selecting, for example, the type and shape of the substrate 10 and the design of the catalyst layer 20 as described later. Hereinafter, the catalyst 100 for exhaust gas purification will be described assuming that the internal combustion engine is a gasoline engine of an automobile, but it is not intended to limit the catalyst 100 for exhaust gas purification to such an application.

### <Substrate 10>

The substrate 10 constitutes the skeleton of the catalyst 100 for exhaust gas purification. As the substrate 10, various materials and forms that are conventionally used for this type of application can be employed. For example, ceramics such as cordierite, aluminum titanate, and silicon carbide are suitable as materials therefor because of their high heat resistance. Alternatively, a substrate made of an alloy (such as stainless steel) can be used.

Regarding the form, the substrate 10 has a honeycomb structure, which here has a plurality of cells 12 regularly disposed along the cylinder axis direction X (flow direction of the exhaust gas) and rib walls 14 that partition the substrate into the plurality of cells 12. The cell 12 is a through hole that serves as a passage for the exhaust gas. The rib wall 14 is a partition wall that separates the individual cells 12 from one another. The cross-sectional shape of the cell 12 here is rectangular. However, the cross-sectional shape of the cell 12 may be other shapes (e.g., circular, triangular, hexagonal, and the like).

The external shape of the substrate 10 here is cylindrical. However, the external shape of the substrate 10 may be other shapes (e.g., elliptical cylindrical, polygonal cylindrical, and the like). The substrate 10 here has a honeycomb shape. However, the substrate 10 may also be in the form of foam, pellets, or the like. The volume of the substrate 10 is typically approximately 0.1 to 10 L, e.g., 0.5 to 5 L. An entire length L of the substrate 10 in the cylinder axis direction X (see FIG. 2) is typically approximately 10 to 500 mm, for example, 50 to 300 mm. It should be noted that the volume of the substrate 10 herein refers to its bulk volume (apparent volume), which includes the net volume of the substrate 10 and the volume of internal voids such as those within the cells 12.

The substrate 10 illustrated in FIG. 1 is a so-called straight flow type substrate where an inlet-side opening and an outlet-side opening of each cell 12 are not blocked. However, the substrate 10 may also be a so-called wall-flow type (also called wall-through type) substrate, in which the inlet-side openings and the outlet-side openings of a number of cells 12 are alternately closed, allowing the exhaust gas to flow from one cell (inlet-side cell) to the adjacent cell (outlet-side cell) through the rib walls 14.

### <Catalyst Layer 20>

FIG. 2 shows a partial cross-sectional view of the catalyst 100 for exhaust gas purification, taken along the cylinder axis direction X. As illustrated in FIG. 2, the catalyst layer 20 here is formed on the substrate 10 (in detail, the rib walls 14). However, the catalyst layer 20 may partially penetrate into the interior of the rib walls 14. The catalyst layer 20 is a main part of the catalyst 100 for exhaust gas purification that serves as a place where the exhaust gas is purified. Exhaust gas supplied to the catalyst 100 for exhaust gas purification comes into contact with the catalyst layer 20 as it flows (passes) through the flow paths (inside the cells 12) of the substrate 10. Harmful components in the exhaust gas are purified through the contact with the catalyst layer 20.

As illustrated in FIG. 2, the catalyst layer 20 here has a multi-layer structure, specifically a three-layer structure. The catalyst layer 20 includes, in its thickness direction, a lower layer 22 located on the substrate 10 side, an upper layer 26 located on a surface layer side of the catalyst layer 20, and a middle layer 24 located between the lower layer 22 and the upper layer 26. However, the catalyst layer 20 may include any other layers, in addition to the lower layer 22, the middle layer 24, and the upper layer 26 as long as the effects of the present disclosure are not significantly inhibited. That is, the catalyst layer 20 may have a laminated structure composed of four or more layers. In this case, the lower layer 22 and the middle layer 24 are preferably in contact with each other in their thickness direction. Alternatively or additionally, the middle layer 24 and the upper layer 26 are preferably in contact with each other in their thickness direction.

The overall coating amount of the catalyst layer 20 can be determined as appropriate according to the type of the substrate 10 or the like. It is not particularly limited, but is, for example, 150 to 450 g/L, preferably 200 to 400 g/L, and more preferably 250 to 350 g/L, per liter, i.e., L, of the volume of the substrate 10.

A coating length of a portion with the multi-layered (particularly, three-layered) structure of the catalyst layer 20, i.e., an average coating length thereof in the cylinder axis direction X of the substrate 10, is desirably, for example, 60% or more of the entire length L of the substrate 10 in the cylinder axis direction X. It is desirably 70% or more, 80% or more, 90% or more, or 100% or more of the entire length L of the substrate 10 in the cylinder axis direction X. It should be noted that the lower layer 22, the middle layer 24, and the upper layer 26 are illustrated with the same coating length in FIG. 2, but the lower layer 22, the middle layer 24, and the upper layer 26 may have different coating lengths from each other as long as they are laminated in three layers at least partially in the cylinder axial direction X.

A coating thickness of a portion with the multi-layer (especially three-layer) structure of the catalyst layer 20, i.e., an average thickness thereof in the direction perpendicular to the cylinder axis direction X, is desirably, for example, 3 to 300 µm, 5 to 200 µm, and 10 to 100 µm. It should be noted that the lower layer 22, the middle layer 24, and the upper layer 26 are illustrated with the same thickness in FIG. 2, but the lower layer 22, the middle layer 24, and the upper layer 26 may have different thicknesses from each other. Although not particularly limited, the coating thickness of the lower layer 22 is, for example, 10 to 30 µm, preferably 15 to 25 µm. The coating thickness of the middle layer 24 is, for example, 40 to 60 µm, preferably 45 to 55 µm. The coating thickness of the upper layer 26 is, for example, 20 to 40 µm, preferably 25 to 35 µm. The lower layer 22, the middle layer 24, and the upper layer 26 do not have to have a uniform coating thickness. For example, the lower layer 22 may have a coating thickness increased at the center thereof in the cylinder axis direction X.

The catalyst layer 20 contains at least (1) a catalyst metal and (2) a NOₓ storage material. The catalyst layer 20 preferably further includes (3) an oxygen storage material (OSC material) that has an oxygen storage capacity and/or (4) a non-OSC material that has no oxygen storage capacity. The OSC material and/or non-OSC material may be contained in the catalyst layer 20 as a support for the catalyst metal, or in the form that does not support the catalyst metal. The catalyst layer 20 may be mainly composed of the OSC material and/or the non-OSC material (components accounting for 50% by mass or more of the total; the same applies hereinafter).
(1) The catalyst metal essentially contains three species of precious metals belonging to a platinum group (PGM), i.e., rhodium (Rh), palladium (Pd), and platinum (Pt). In addition to the three species of metals described above, the catalyst metal may further contain various other species of metals capable of functioning as an oxidation catalyst and/or a reduction catalyst for purifying harmful components in the exhaust gas. Examples thereof include PGMs other than those listed above, such as ruthenium (Ru), osmium (Os), and iridium (Ir); metals belonging an iron group, such as iron (Fe), cobalt (Co), and nickel (Ni); gold (Au); silver (Ag); copper (Cu); and the like. The catalyst metal is typically supported by a support (e.g., the OSC material and/or the non-OSC material as described below). The catalyst metal is preferably contained in each of the lower layer 22, the middle layer 24, and the upper layer 26. The lower layer 22, the middle layer 24, and the upper layer 26 preferably contain different species of catalyst metals as main components. The correspondence between each layer and the species of the catalyst metal will be described later.

The catalyst metal is preferably made of fine particles with a sufficiently small particle size from the viewpoint of enhancing a contact area with the exhaust gas. The average particle size of the catalyst metal is, for example, 1 to 15 nm, preferably 1 to 10 nm, and more preferably 1 to 5 nm. The average particle size of the catalyst metal can be determined by obtaining a transmission electron microscope (TEM) image of the catalyst metal and averaging the particle diameters of 50 or more catalyst metal particles arbitrarily selected from the image.

The total amount of the catalyst metal contained in the entire catalyst layer 20 can be determined as appropriate according to, for example, the amount of exhaust gas, applications, the species of catalyst metal, and the like. It is not particularly limited, but is, for example, 0.5 g/L or more, preferably 1.0 g/L or more, and more preferably 2.0 g/L or more, per L of the volume of the substrate 10. On the other hand, the total amount of the catalyst metal contained in the entire catalyst layer 20 is desirably, for example, 8.0 g/L or less, preferably 7.0 g/L or less, and more preferably 6.0 g/L or less, per L of the volume of the substrate 10.

(2) As the NOₓ storage material, conventionally known materials used for this type of application can be employed. The NOₓ storage material typically contains at least one of alkali metal elements and alkaline earth metal elements as the NOₓ storage element. An example thereof is a compound that contains at least one NOₓ storage element and is in the form of a carbonate or oxide, or a combination thereof. Examples of alkali metal elements include Li, K, Cs, and the like, among which K is preferable. Examples of alkaline earth metal elements include Mg, Sr, Ba, and the like, among which Ba is preferable. The NOₓ storage material is essentially contained in the middle layer 24.

The total amount of NOₓ storage material contained in the entire catalyst layer 20 is not particularly limited, but is typically less than or equal to the content of the OSC material and/or the non-OSC material, specifically preferably 100 g/L or less, for example, 10 to 50 g/L, per L of the volume of the substrate 10.

(3) As the OSC material, conventionally known materials used for this type of application can be employed. Examples thereof include ceria (cerium oxide, CeO₂) and composite oxides containing ceria, for example, composite oxides containing ceria and zirconia (a ceria-zirconia composite oxide, so-called CZ composite oxide (also called a ZC composite oxide)). From the viewpoint of suppressing thermal degradation of ceria, the OSC material preferably contains a CZ composite oxide, and it is more preferably essentially composed of a CZ composite oxide (accounting for 95% by mass or more of the total; the same applies hereinafter). The OSC material is preferably included in each of the lower layer 22, the middle layer 24, and the upper layer 26 from the viewpoint of preventing oxygen depletion and the like.

The OSC material (for example, CZ composite oxide) may contain other additive components, in addition to ceria and zirconia which are main components, from the viewpoint of improving heat resistance and oxygen absorbing and releasing properties. Examples of additive components that can be contained in the OSC material include rare earth elements, alkali metal elements, alkaline earth metal elements, transition metal elements, and oxides including Si, Al, and the like. Examples of rare earth elements include Sc, Y, La, Pr, Nd, Pm, Sm, Eu, Gd, Tb, Dy, Ho, Er, Tm, Yb, Lu, and the like. Suitable oxides of rare earth elements include Pr₂O₃, Nd₂O₃, La₂O₃, and Y₂O₃. The additive components may be polycrystalline or monocrystalline.

When the OSC material contains ceria, from the viewpoint of sufficiently demonstrating its oxygen storage capacity, the ceria content in the total OSC material is preferably 10% by mass or more, and more preferably 25% by mass or more. On the other hand, from the viewpoint of suppressing the basicity of the OSC material to an appropriate level, the ceria content is preferably 90% by mass or less, and more preferably 75% by mass or less.

The total amount of the OSC material in the entire catalyst layer 20 is not particularly limited, but is preferably 45 to 250 g/L, and more preferably 80 to 200 g/L, per L of the volume of the substrate 10.

(4) As the non-OSC material, conventionally known materials used for this type of application can be employed. Among these, inorganic porous materials with a relatively large specific surface area and excellent heat resistance can be preferably used from the viewpoint of supporting catalyst metal at high dispersion. Examples thereof include alumina (Al₂O₃, aluminum oxide), titania (TiO₂, titanium oxide), zirconia (ZrO₂, zirconium oxide), silica (SiO₂, silicon oxide), and the like. Among these, the non-OSC material preferably contains alumina, and it is more preferably essentially composed of alumina, because of its particularly excellent heat resistance. From the viewpoint of improving heat resistance and durability, the non-OSC material is preferably contained in each of the lower layer 22, the middle layer 24, and the upper layer 26.

The non-OSC material (e.g., alumina) may contain additive components described above, such as oxides of rare earth elements including, for example, Pr₂O₃, Nd₂O₃, La₂O₃, Y₂O3, etc. , from the viewpoint of improving heat resistance and the like.

The total amount of the non-OSC material contained in the entire catalyst layer 20 is not particularly limited, but is preferably 100 to 370 g/L, and more preferably 170 to 300 g/L, per L of the volume of the substrate 10.

In addition to (1) to (4) described above, the catalyst layer 20 may further contain an auxiliary material. The auxiliary material is used, for example, to suppress sintering or poisoning of the catalyst metal or to improve the amount of oxygen stored in the OSC material. As the auxiliary material, conventionally known materials used for this type of application can be employed. Examples thereof include single metals, alloys, and compounds (e.g., oxides, sulfates, carbonates, nitrates, and chlorides) containing one or more of alkali metal elements, alkaline earth metal elements, rare earth metal elements, and transition metal elements. The layer in which the auxiliary material can be contained will be described later.

The following is a detailed description of each of the lower layer 22, the middle layer 24, and the upper layer 26, included in the catalyst layer 20.

### <Lower Layer 22>

As illustrated in FIG. 2, the lower layer 22 here is formed directly on the surface of the substrate 10. In the present embodiment, the lower layer 22 has a lower-layer front portion 22a located on an upstream side X1 in the flow direction F of the exhaust gas and a lower-layer rear portion 22b located on a downstream side X2 in the flow direction F of the exhaust gas relative to the lower- layer front portion 22a. The lower-layer front portion 22a here is provided along the cylinder axis direction X from an end of the substrate 10 on the upstream side X1. The lower-layer rear portion 22b here is provided along the cylinder axis direction X from the other end of the substrate 10 on the downstream side X2. The lower layer 22, in particular, the lower-layer front portion 22a, functions as a CO purification layer in a lean atmosphere, for example, during lean start control.

The lower-layer front portion 22a and the lower-layer rear portion 22b each contain Pd as the catalyst metal. Pd has particularly high oxidation activity among catalyst metals and is particularly excellent in CO purification performance. By disposing Pd in the lower layer 22, which is easily warmed up during startup, the CO purification reaction can be suitably caused during the lean startup control. In addition, an oxidation catalyst such as Pd is easily affected by toxic substances (e.g., sulfur) contained in the exhaust gas. Thus, by disposing Pd in the lower layer 22 separated from the upper layer 26 to which toxic substances easily adhere, Pd can be prevented from coming into contact with the toxic substances.

The total amount of Pd contained in the entire lower layer 22 is not particularly limited, but is, for example, 0.1 g/L or more, or 0.5 g/L or more, preferably 1.0 g/L or more, and more preferably 2.0 g/L or more, per L of the volume of the substrate 10. This can induce the CO purification reaction more actively during the lean start control, thereby demonstrating the effects of the technology disclosed herein at a high level. On the other hand, the total amount of Pd contained in the entire lower layer 22 is, for example, 5.0 g/L or less, preferably 4.0 g/L or less, more preferably 3.0 g/L or less, and even more preferably 2.9 g/L or less, or 2.5 g/L or less, per L of the volume of the substrate 10. In such a case, the CO purification reaction becomes sluggish during the lean start control, whereby especially the NO oxidation reaction is apt to be inhibited more easily. Therefore, the application of the technology disclosed herein is particularly effective.

In the present embodiment, a Pd content (C_{F}) in the lower-layer front portion 22a per L of the substrate is greater than a Pd content (C_{R}) in the lower-layer rear portion 22b per L of the substrate. That is, C_{F} > C_{R} is satisfied. In other words, a ratio (C_{F}/C_{R}) of the Pd content (C_{F}) in the lower-layer front portion 22a to the Pd content (C_{R}) in the lower-layer rear portion 22b satisfies the following formula: 1 < (C_{F}/C_{R}). By increasing the Pd content in the lower-layer front portion 22a, which is easily heated at startup, the CO purification reaction can be more actively induced. This enables CO to be purified quickly, thereby starting the NO oxidation reaction smoothly. In addition, the reaction heat (heat capacity) during the CO purification reaction is transferred to the downstream side as the exhaust gas flows, thus enabling an improvement in the warming up of the entire catalyst layer. As a result, the catalyst metal can be quickly heated to the activation temperature. Therefore, NOₓ can be prevented from passing through the catalyst 100 for exhaust gas purification and being discharged as emissions, especially when the internal combustion engine is started.

The above ratio (C_{F}/C_{R}) is preferably 1.2 or more, and more preferably 1.5 or more from the viewpoint of demonstrating the effects of the technology disclosed herein at a high level. On the other hand, the upper limit of the above ratio (C_{F}/C_{R}) is not particularly limited, but when the above ratio becomes large to a certain extent, the effects of the technology disclosed herein reach their limits. Therefore, the above ratio (C_{F}/C_{R}) is approximately 10 or less, 5.0 or less, preferably 4.0 or less, more preferably 3.5 or less, and even more preferably 3.0 or less.

In particular, the above ratio (C_{F}/C_{R}) preferably satisfies the following formula: 1.2 ≤ (C_{F}/C_{R}) ≤ 3.5; more preferably 1.5 ≤ (C_{F}/C_{R}) ≤ 3.0; and particularly preferably 1. 5 ≤ (C_{F}/C_{R}) ≤ 2.0. Thus, the NOₓ purification performance in stoichiometric to rich atmospheres can be enhanced. Therefore, NOₓ emissions can be reduced in a wide range of lean to rich atmospheres.

The Pd content (C_{F}) in the lower-layer front portion 22a is not particularly limited, but is approximately 0.1 g/L or more, 0.5 g/L or more, preferably 1.0 g/L or more, more preferably 2.0 g/L or more, and particularly 2.5 g/L or more, per L of the volume of the substrate 10. This can further enhance NOₓ storage performance in the lean atmosphere, thereby demonstrating the effects of the technology disclosed herein at a high level. If the catalyst metal content is extremely high, then the effects of the technology disclosed herein will reach their limits, or the catalyst metal tends to lead to grain growth. For this reason, the Pd content (C_{F}) in the lower-layer front portion 22a is 6.0 g/L or less, preferably 5.0 g/L or less, and more preferably 4.0 g/L or less, and may be even 3.5 g/L or less, per L of the volume of the substrate 10.

The Pd content (C_{R}) in the lower-layer rear portion 22b is not particularly limited, but is approximately 0.1 g/L or more, 0.5 g/L or more, and preferably 1.0 g/L or more, per L of the volume of the substrate 10. Thus, the NOₓ purification performance in the stoichiometric to rich atmospheres can be enhanced. If the catalyst metal content is extremely large, it becomes disadvantageous in terms of costs. Thus, the Pd content (C_{R}) of the lower-layer rear portion 22b is 4.0 g/L or less, preferably 3.0 g/L or less, and more preferably 2.0 g/L or less, and may be, for example, 1.5 g/L or less, per L of the volume of the substrate 10.

The lower-layer front portion 22a and/or lower-layer rear portion 22b may contain a catalyst metal other than Pd. Examples thereof include precious metals belonging to the platinum group (PGM) as described above. Among these, Pt is particularly suitable because of its high oxidation activity. In the lower-layer front portion 22a and the lower-layer rear portion 22b, the Pd content in the entire catalyst metal is preferably 80% by mass or more, and more preferably 90% by mass or more, and it is particularly preferred that the catalyst metal is essentially composed of Pd.

Each of the lower-layer front portion 22a and the lower-layer rear portion 22b preferably contains the non-OSC material. The non-OSC material may be a carrier that supports the catalyst metal such as Pd or may be in a form that does not support a catalyst metal such as Pd. The non-OSC material may be the first component of each of the lower-layer front portion 22a and the lower-layer rear portion 22b (which is a component whose content is the highest on the mass basis; the same applies hereinafter). The content of the non-OSC material in the lower-layer front portion 22a per L of the substrate is preferably greater than the content of the non-OSC material in the lower-layer rear portion 22b per L of the substrate. This can further enhance the heat resistance and durability of the lower-layer front portion 22a.

The content of the non-OSC material in the lower-layer front portion 22a is not particularly limited, but is preferably 40 to 110 g/L, and more preferably 50 to 100 g/L, for example, 60 to 90 g/L, per L of the volume of the substrate 10. The content of the non-OSC material in the lower-layer front portion 22a is preferably greater than the content of the non-OSC material in the lower-layer rear portion 22b by 10 g/L or more, even 20 g/L or more. The content of the non-OSC material in the lower-layer rear portion 22b is not particularly limited, but is preferably 20 to 90 g/L, and more preferably 30 to 80 g/L, for example, 40 to 70 g/L, per L of the volume of the substrate 10.

Each of the lower-layer front portion 22a and the lower-layer rear portion 22b preferably contains the OSC material. The OSC material may be a support that supports a catalyst metal such as Pd, or may be in a form that does not support a catalyst metal such as Pd. Contrary to the non-OSC material, the content of the OSC material in the lower-layer front portion 22a per L of the substrate is preferably smaller than the content of the OSC material in the lower-layer rear portion 22b per L of substrate. Thus, the exhaust gas purification performance in the stoichiometric to rich atmospheres can be further enhanced.

The content of the OSC material in the lower-layer front portion 22a is not particularly limited, but is preferably from 1 to 60 g/L and more preferably 5 to 50 g/L, for example, 10 to 40 g/L, per L of the volume of the substrate 10. The content of the OSC material in the lower-layer front portion 22a is preferably smaller than the content of the OSC material in the lower-layer rear portion 22b by 10 g/L or more, 20 g/L or more, or even 30 g/L or more. The content of the OSC material in the lower-layer rear portion 22b is not particularly limited, but is preferably 20 to 90 g/L, and more preferably 30 to 80 g/L, for example, 40 to 70 g/L, per L of the volume of the substrate 10.

The lower-layer front portion 22a and/or lower-layer rear portion 22b may further contain the auxiliary material or NO_{X} storage material as described above. For example, the inclusion of an alkaline earth element (such as Ba) can prevent poisoning of the catalyst metal, especially an oxidation catalyst such as Pd. In addition, the dispersibility of the catalyst metal is enhanced, so that sintering of the catalyst metal can be suppressed. Also, for example, the inclusion of an alkaline earth element together with the OSC material can improve the amount of oxygen stored into the OSC material in the lean atmosphere. Furthermore, the inclusion of the NOₓ storage material can improve the amount of NOₓ stored therein in the lean atmosphere.

In the lower-layer front portion 22a and/or the lower-layer rear portion 22b, the content of the auxiliary material and/or the NOₓ storage material is not particularly limited, but is preferably 30 g/L or less, and more preferably 20 g/L or less, for example, 10 g/L or less, per L of the volume of the substrate 10. The contents of the auxiliary material and/or NOₓ storage material per L of the substrate in the lower-layer front portion 22a and lower-layer rear portion 22b may be substantially the same (within a variance of approximately ±10%, such as within ±5%).

The coating amounts of the lower-layer front portion 22a and the lower-layer rear portion 22b are not particularly limited, but each of them is preferably 50 to 250 g/L, more preferably 70 to 200 g/L, and even more preferably 80 to /150 g/L, per L of the volume of the substrate 10, for example.

A coating length La of the lower-layer front portion 22a in the flow direction F of the exhaust gas (cylinder axis direction X) is typically shorter than the entire length L of the substrate 10 in a stretch direction (cylinder axis direction X). The coating length La of the lower-layer front portion 22a is not particularly limited, but is preferably 20 to 70% of the entire length L of the substrate 10, more preferably 30 to 60%, and even more preferably 40 to 50%, for example, less than 50%. A coating length Lb of the lower-layer rear portion 22b in the flow direction of the exhaust gas (cylinder axis direction X) is typically shorter than the entire length L of the substrate 10 in the stretch direction (cylinder axis direction X). The coating length Lb of the lower-layer rear portion 22b is preferably 50% or more of the entire length L of the substrate 10, more preferably 60 to 90%, and even more preferably 70 to 80%. This can improve both the NOₓ purification performance in the lean atmosphere and the NOₓ purification performance in the stoichiometric to rich atmospheres at a high level.

The coating length La of the lower-layer front portion 22a is preferably shorter than the coating length Lb of the lower-layer rear portion 22b. That is, La < Lb is preferred. This significantly differentiates the Pd concentration between the upstream and downstream sides, biasing the Pd toward the upstream side, thereby further demonstrating the effects described above.

In the embodiment illustrated in FIG. 2, La + Lb ≈ L is satisfied, and the lower-layer front portion 22a and the lower-layer rear portion 22b are in contact with each other along the cylinder axis direction X. However, the lower-layer front portion 22a and the lower-layer rear portion 22b may be separated from each other in the cylinder axis direction X. The sum (La + Lb) of the coating length La of the lower-layer front portion 22a and the coating length Lb of the lower-layer rear portion 22b is preferably L ≤ (La + Lb), for example, L ≤ (La + Lb) ≤ 1.5L. That is, the lower-layer front portion 22a and the lower-layer rear portion 22b may partially overlap each other at the center in the cylinder axis direction X, for example, due to a manufacturing method using slurry. In such a case, the lower-layer rear portion 22b is preferably disposed on the substrate 10 side.

### <Middle Layer 24>

The middle layer 24 contains Pt as the catalyst metal and the NOₓ storage material as described above, and functions as the NOₓ storage layer in the lean atmosphere, for example, during the lean start control. The middle layer 24 can also function as a three-way catalyst layer, for example, in the stoichiometric to rich atmospheres. Since the middle layer 24 is sandwiched between the lower layer 22 and the upper layer 26, the exhaust gas having flowed in from the upper layer 26 side or any harmful component contained in the exhaust gas tends to be easily retained in the middle layer 24. Thus, the inclusion of the NOₓ storage material in the middle layer 24 allows NO₂ to be easily stored therein in the lean atmosphere. Also, in the stoichiometric to rich atmospheres, NO₂ desorbed from the NOₓ storage material can easily come into contact with reducing gas such as HC or CO. Thus, NOₓ emissions can be reduced in a wide range of lean to rich atmospheres.

Pt has particularly high oxidation performance, especially excellent NO oxidation performance, among catalyst metals. Thus, the inclusion of Pt in the middle layer 24 can oxidize NO in the vicinity of the NOₓ storage material in the lean atmosphere to produce NO₂. Pt also has high reactivity with paraffin-based HC. Thus, the inclusion of Pt in the middle layer 24 can effectively purify HC and CO in the stoichiometric to rich atmospheres, for example. The Pt content in the middle layer 24 is not particularly limited, but is preferably 0.1 to 5 g/L, and more preferably 0.5 to 3 g/L, per L of the volume of the substrate 10. This can improve both the NOₓ storage performance in the lean atmosphere and the HC purification performance in the stoichiometric to rich atmospheres at a high level.

The middle layer 24 may further contain a catalyst metal other than Pt. Examples thereof include precious metals belonging to the platinum group (PGM) as described above. Among these, Pd, which has high oxidation activity, is suitable. In the middle layer 24, the Pt content in the entire catalyst metal is preferably 80% by mass or more, and more preferably 90% by mass or more, and it is particularly preferred that the catalyst metal is essentially composed of Pt. CO tends to remain particularly in the middle layer 24, and the NO oxidation reaction is easily inhibited in a case where the middle layer 24 is substantially free of Pd (its content in the entire layer is approximately 5% by mass or less, preferably 1% by mass or less, and more preferably 0.1% by mass or less; the same applies hereinafter) or in a case where the middle layer 24 contains Pd and the Pd content (Cm) in the middle layer 24 per L of the substrate is smaller than the Pd content (C_{R}) in the lower-layer rear portion 22b per L of the substrate. Therefore, the application of the technology disclosed herein is particularly effective.

The NOₓ storage material preferably contains an alkaline earth metal element, especially Ba, as the NOₓ storage element. The NOₓ storage material is particularly preferably one compound selected from the group consisting of oxides containing Ba and carbonates containing Ba. The content of the NOₓ storage material in the middle layer 24 is not particularly limited, but is preferably 1 to 60 g/L, and more preferably 10 to 50 g/L, for example, from 20 to 40 g/L, per L of the volume of the substrate 10.

The middle layer 24 preferably further contains the OSC material. The middle layer 24 more preferably contains the OSC material and the non-OSC material. The OSC material and/or the non-OSC material may be a support that supports a catalyst metal such as Pt or may be in a form that does not support a catalyst metal such as Pt. The OSC material may be a first component of the middle layer 24. The content of the OSC material in the middle layer 24 is not particularly limited, but is preferably 60 to 120 g/L, and more preferably 70 to 110 g/L, for example, 80 to 100 g/L, per L of the volume of the substrate 10. The content of the non-OSC material in the middle layer 24 is not particularly limited, but is preferably 1 to 60 g/L, and more preferably 10 to 50 g/L, for example, 20 to 40 g/L, per L of the volume of the substrate 10.

The coating amount of the middle layer 24 is not particularly limited, but is preferably 120 to 200 g/L, more preferably 130 to 180 g/L, and even more preferably 140 to 170 g/L, for example, per L of the volume of the substrate 10.

### <Upper Layer 26>

The upper layer 26 contains Rh as the catalyst metal. The upper layer 26 can function as the three-way catalyst layer. The upper layer 26 functions as a NOₓ reduction layer, for example, in the stoichiometric to rich atmospheres. That is, NO₂ stored in the middle layer 24 tends to move toward the surface layer side when it becomes gas and is desorbed from the NOₓ storage material. Thus, by including Rh in the upper layer 26, which is located on the surface layer side relative to the middle layer 24, NO₂ can be efficiently removed when it is desorbed from the NOₓ storage material.

Among catalyst metals, Rh has particularly high H₂ generation capacity and also high three-way performance (particularly NOₓ purification performance). Thus, it can efficiently purify NOₓ in the stoichiometric to rich atmospheres, for example. The Rh content in the upper layer 26 is not particularly limited, but is preferably 0.01 to 1.0 g/L, and more preferably 0.05 to 0.5 g/L, per L of the volume of the substrate 10.

The upper layer 26 may further contain another catalyst metal in addition to Rh. Examples thereof include precious metals belonging to the platinum group (PGM) as described above. Among these, Pd and Pt, which have high oxidation activity, are suitable. In the upper layer 26, the Rh content in the entire catalyst metal is preferably 30% by mass or more, and more preferably 50% by mass or more.

The upper layer 26 preferably further contains the non-OSC material. The upper layer 26 more preferably contains the OSC material and the non-OSC material. The OSC material and/or the non-OSC material may be a support that supports a catalyst metal such as Rh or may be in a form that does not support a catalyst metal such as Rh. The non-OSC material may be a first component of the upper layer 26. The content of the non-OSC material in the upper layer 26 is not particularly limited, but is preferably 30 to 100 g/L, and more preferably 40 to 90 g/L, for example, 50 to 80 g/L, per L of the volume of the substrate 10. The content of the OSC material in the upper layer 26 is not particularly limited, but is preferably 1 to 50 g/L, and more preferably 5 to 40 g/L, for example, 10 to 30 g/L, per L of the volume of the substrate 10.

The upper layer 26 may further contain the auxiliary material or NO_{X} storage material, such as that described above. In one preferred embodiment, the upper layer 26 is substantially free of NOₓ storage materials, auxiliary materials containing alkali metal elements, and auxiliary materials containing alkaline earth metal elements.

The coating amount of the upper layer 26 is not particularly limited, but is preferably 50 to 120 g/L, more preferably 60 to 110 g/L, and even more preferably 70 to 100 g/L, for example, per L of the volume of the substrate 10.

### <Manufacturing Method of Catalyst 100 for Exhaust Gas Purification>

The manufacturing method is not particularly limited, but the catalyst 100 for exhaust gas purification can be manufactured, for example, by the following method. First, the substrate 10 and a slurry for forming the catalyst layer 20 are prepared. The slurry for forming the catalyst layer can be prepared, for example, by mixing a catalyst metal source (e.g., a solution containing catalyst metals as ions) and other components (e.g., the NOₓ storage material, the non-OSC material, the OSC material, a binder, various additives, and the like) in a dispersant. For example, water or a mixture of water and a water-soluble organic solvent can be used as the dispersant.

The properties of the slurry (e.g., viscosity, solid content, etc.) can be determined as appropriate according to the size of the substrate 10 used, the form of the cells 12 or rib walls 14, the required properties of the catalyst layer 20, and the like. The use of a thickening agent is advantageous for adjusting the viscosity of the slurry. Examples of usable thickening agents include cellulose polymers, such as carboxymethyl cellulose (CMC), methyl cellulose (MC), hydroxypropyl methyl cellulose (HPMC), hydroxyethyl methyl cellulose (HEMC), hydroxyethyl cellulose (HEC), HEC citric acid cross-linked products obtained by cross-linking HEC with a citric acid, and the like.

Specifically, first, a slurry for forming the lower layer containing a Pd source, a slurry for forming the middle layer containing a Pt source and the NOₓ storage material, and a slurry for forming the upper layer containing a Rh source are prepared. At this time, as the slurry for forming the lower layer, a slurry for forming the low-layer front portion whose Pd content is relatively high, and a slurry for forming the lower-layer rear portion whose Pd content is relatively low are prepared.

Next, the slurry for forming the lower-layer rear portion is applied from the end of the substrate 10 on the downstream side X2 up to a predetermined position by a known coating method (e.g., a suction coating method, an air blow method, a wash coating method, etc.), and then dried according to a known method. Subsequently, the slurry for forming the lower-layer front portion is applied from the end of the substrate 10 on the upstream side X1 up to a predetermined position and then dried according to known methods. Then, by firing these, the lower layer 22 is formed. It is noted that in the suction coating method, for example, the coating length of each layer can be precisely adjusted by immersing one end of the substrate in the slurry while drawing the slurry from the other end.

Next, the slurry for forming the middle layer is applied on the lower layer 22 by a known coating method, dried, and fired to form the middle layer 24. Furthermore, the slurry for forming the upper layer is applied on the middle layer 24 by a known coating method, dried, and fired to form the upper layer 26. It is noted that the drying conditions for the slurry may typically include the temperature of 70 to 150°C, for example, 90 to 130°C, for about 1 to 10 hours. The firing conditions typically include the temperature of about 300 to 800°C, e.g., 400 to 500 °C, for about 1 to 4 hours.

### <Applications of Catalyst 100 for Exhaust Gas Purification>

As described above, the catalyst 100 for exhaust gas purification can improve the NOₓ storage performance in the lean atmosphere, for example, when starting an internal combustion engine. In addition, it is preferably capable of achieving excellent NOₓ purification performance in the stoichiometric to rich atmospheres. Therefore, the catalyst 100 for exhaust gas purification can be suitably used to purify exhaust gas emitted from internal combustion engines of vehicles such as automobiles and trucks, motorcycles and motorbikes, marine products such as ships, tankers, water bikes, personal watercrafts and outboard motors, gardening products such as mowers, chainsaws and trimmers, leisure products such as golf carts and four-wheel buggies, power generation instruments such as cogeneration systems, and garbage incinerators. Among these, it is suitable for use in vehicles such as automobiles, especially for vehicles equipped with gasoline engines.

### <<Exhaust Gas Purification System and Control Method>>

An exhaust gas purification system disclosed herein includes: an exhaust passage connected to an internal combustion engine; the catalyst 100 for exhaust gas purification disposed in the exhaust passage; an air-fuel ratio adjustment device provided upstream of the catalyst 100 for exhaust gas purification in the flow direction of the exhaust gas; and a control unit. The air-fuel ratio adjustment device is, for example, a fuel adding device that sprays atomized fuel (HC) to the exhaust gas. The control unit is configured to enable the lean start control, in which the air-fuel ratio adjustment device is controlled to start supplying the exhaust gas to the catalyst 100 for exhaust gas purification with the air-fuel ratio of the exhaust gas being adjusted to a lean level when the internal combustion engine is started. During the warm-up process during the lean start control, NOₓ in the exhaust gas is introduced into the catalyst 100 for exhaust gas purification (in detail, the NOₓ storage material).

In such an exhaust gas purification system, the control unit preferably performs preparation control to control the air-fuel ratio adjustment device to supply the exhaust gas to the catalyst 100 for exhaust gas purification with the air-fuel ratio of the exhaust gas being adjusted to a rich level before starting the lean start control. Thus, the oxidation catalyst (especially, Pt and Pd) can be reduced, thereby improving the oxidation performance of the oxidation catalyst as the preparation for incorporating NOₓ into the NOₓ storage material. As a result, NOₓ is incorporated easily into the NOₓ storage material, which can suitably increase the amount of NOₓ stored therein.

In the following, a description will be given of test examples related to the present disclosure, but it is not intended to limit the present disclosure to those shown in the test examples below.

### [Test Example I: Evaluation of NOₓ storage performance in lean atmosphere]

In Test Example I, the Pd contents in the lower-layer front portion and the lower-layer rear portion were changed to evaluate the NOₓ storage performance in a lean atmosphere, specifically, a 50% CO purification achievement time and a NOₓ storage start time.

### <Substrate for Testing>

First, a cylindrical honeycomb substrate made of cordierite (diameter: 118.4 mm, entire length: 114.3 mm, volume: 1.26 L) was prepared. One end of this substrate was defined as the end on the upstream side X1 (i.e., the end on the exhaust gas inflow side), and the other end was defined as the end on the downstream side X2 (i.e., the end on the exhaust gas outflow side).

### <Fabrication of Catalyst for Exhaust Gas Purification of Example 1>

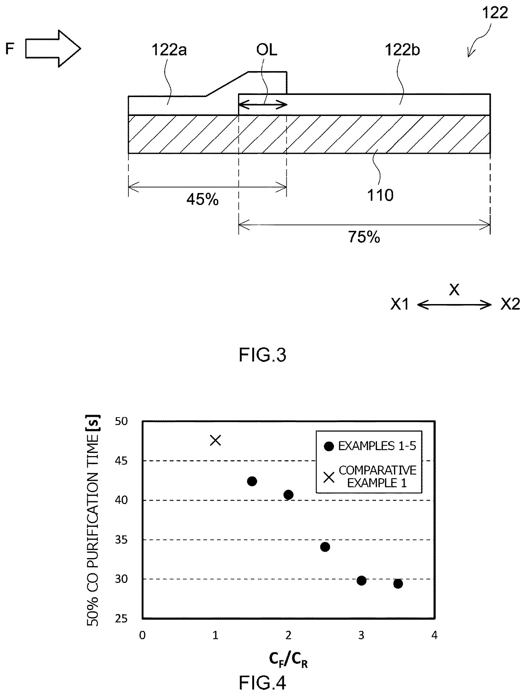

As Example 1, a catalyst for exhaust gas purification in which the Pd content in the lower-layer front portion was higher than that in the lower-layer rear portion was fabricated. Specifically, first, a lower layer 122 containing the components listed in Table 1 and having a cross-sectional shape illustrated in FIG. 3 was formed. In detail, first, a palladium nitrate solution as the Pd source, CZ composite oxide powder as the OSC material, Al₂O₃ powder as the non-OSC material, barium sulfate as the auxiliary material, and HEC as the thickening agent were mixed in ion exchanged water, and further the mixture was subjected to milling such that the average particle size (D50) of the powder was 5 µm, thereby preparing two types of slurries, namely, a slurry for forming the lower-layer front portion and a slurry for forming the lower-layer rear portion.

Next, the slurry for forming the lower-layer rear portion was applied onto an area from the downstream side end of the substrate up to 45% of the entire length of the substrate by the suction coating method, dried at 90°C for 1 hour, and then fired at 500°C for 1 hour, thereby forming a lower-layer rear portion 122b. The slurry for forming the lower-layer front portion was applied onto an area from the downstream side end of the substrate up to 75% of the entire length of the substrate by the suction coating method, dried at 90°C for 1 hour, and then fired at 500°C for 1 hour, thereby forming a lower-layer front portion 122a. Thus, as illustrated in FIG. 3, the lower layer 122 having the lower-layer front portion 122a and the lower-layer rear portion 122b was formed on the surface of a substrate 110. It should be noted that the lower-layer front portion 122a and the lower-layer rear portion 122b partially overlapped each other at the center of the substrate 110 in the cylinder axis direction (area OL in FIG. 3).

**[Table 1]**

| Table 1 Configuration of Lower Layer | | | | |
|---|---|---|---|---|
| Components and coating amount of lower-layer front portion 122a | | | | |
| Pd C_{F}(g/L) | OSC material (g/L) | Non-OSC material (g/L) | Auxiliary material (g/L) | Coating amount (g/L) |
| 2.46 | 25 | 77 | 5 | 109 |

| Components and coating amount of lower-layer front portion 122b | | | | |
|---|---|---|---|---|
| Pd C_{R} (g/L) | OSC material (g/L) | Non-OSC material (g/L) | Auxiliary material (g/L) | Coating amount (g/L) |
| 1.64 | 55 | 57 | 5 | 119 |

Next, a middle layer containing components listed in Table 2 was formed on the lower layer. Specifically, first, a platinum nitrate solution as the Pt source, CZ composite oxide powder as the OSC material, Al₂O₃ powder as the non-OSC material, barium carbonate as the NOₓ storage material, and HEC as the thickening agent were mixed in ion exchanged water, and further the mixture was subjected to milling such that the average particle size (D50) of the powder was 5 µm, thereby preparing a slurry for forming the middle layer. Then, the slurry for forming the middle layer was applied onto the formed lower layer over the entire length of the substrate (100%) by a washcoat method, dried at 90°C for 1 hour, and then fired at 500°C for 1 hour, thereby forming the middle layer.

**[Table 2]**

| Table 2 Configuration of Middle Layer | | | | |
|---|---|---|---|---|
| Pt (g/L) | OSC material (g/L) | Non-OSC material (g/L) | NOx storage material (g/L) | Coating amount (g/L) |
| 2.5 | 90 | 30 | 30 | 152.5 |

Next, an upper layer containing components listed in Table 3 was formed on the middle layer. Specifically, first, a rhodium nitrate solution as the Rh source, a palladium nitrate solution as the Pd source, CZ composite oxide powder as the OSC material, Al₂O₃ powder as the non-OSC material, and an HEC citric acid cross-linked product as the thickening agent were mixed in ion-exchange water, and further the mixture was subjected to milling such that the average particle size (D50) of the powder was 5 µm, thereby preparing a slurry for forming the upper layer. Thus, the slurry for forming the upper layer was applied on the formed middle layer over the entire length (100%) of the substrate by the washcoat method, dried at 90°C for 1 hour, and then fired at 500°C for 1 hour, thereby forming the upper layer. In the way described above, a catalyst for exhaust gas purification of Example 1 was obtained.

**[Table 3]**

| Table 3 Configuration of Upper Layer | | | | |
|---|---|---|---|---|
| **Rh** (g/L) | **Pd** (g/L) | OSC material (g/L) | Non-OSC material (g/L) | Coating amount (g/L) |
| 0.2 | 0.1 | 20 | 64 | 84.3 |

### <Fabrication of Catalysts for Exhaust Gas Purification of Examples 2 to 5 and Comparative Example 1>

A catalyst for exhaust gas purification of each Example was obtained in the same way as in Example 1, except that the Pd content (C_{F}) in the lower-layer front portion and the Pd content (C_{R}) in the lower-layer rear portion were changed as shown in Table 4. Table 4 also shows the ratio (C_{F}/C_{R}) of the Pd content (C_{F}) in the lower-layer front portion to the Pd content (C_{R}) in the lower-layer rear portion.

### [Table 4]

**Table 4**

| | Lower layer | | | Evaluation results 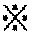 | |
|---|---|---|---|---|---|
| | Pd C_{F} (g/L) | Pd C_{R} (g/L) | C_{F}/C_{R} | 50% CO purification time [s] | NO_{X} storage start time [s] |
| Comparative Example 1 | 1.95 | 1.95 | 1 | 47.6 | 44 |
| Example 1 | 2.46 | 1.64 | 1.5 | 42.4 | 40 |
| Example 2 | 2.83 | 1.42 | 2 | 40.7 | 40 |
| Example 3 | 3.11 | 1.25 | 2.5 | 34.1 | 38 |
| Example 4 | 3.33 | 1.11 | 3 | 29.8 | 36 |
| Example 5 | 3.51 | 1.00 | 3.5 | 29.4 | 35.5 |

| | | | | | |
|---|---|---|---|---|---|
| *Lean atmosphere (A/F=15.7) | | | | | |

### <Evaluation of 50% CO Purification Time and NOₓ Storage Start Time in Lean Atmosphere>

The catalysts for exhaust gas purification of each Example was installed in an exhaust pipe of an engine bench after being cooled to 100°C or lower. The exhaust gas (λ value = 1.08, A/F = 15.7), the temperature of which was adjusted to 300°C in a heat exchanger, was then allowed to flow into the catalyst for exhaust gas purification. At this time, the CO concentration at a position before the catalyst inflow and the CO concentration at a position after the catalyst outflow were measured. Based on these measurements, the 50% CO purification time in a lean atmosphere (A/F = 15.7) was calculated. The amount of NOₓ at the position before the catalyst inflow and the amount of NOₓ at the position after the catalyst outflow were measured. Based on these measurements, the NOₓ storage start time in the lean atmosphere (A/F = 15.7) was calculated. The results are shown in Table 4.

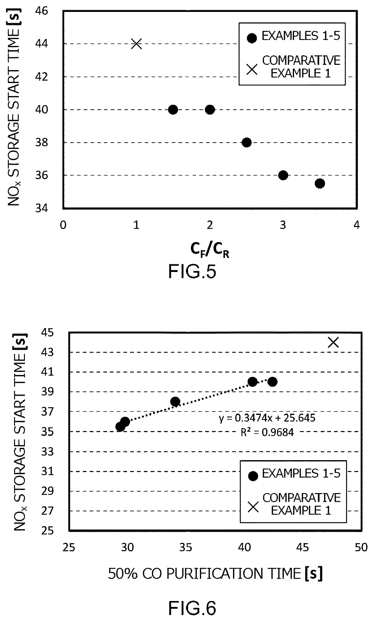

FIG. 4 shows a relationship between the ratio (C_{F}/C_{R}) of the Pd content and the 50% CO purification time. FIG. 5 shows a relationship between the ratio (C_{F}/C_{R}) of the Pd content and the NO storage start time. FIG. 6 shows a relationship between the 50% CO purification time and the NO storage start time. As shown in Table 4 and FIGS. 4 and 5, the larger the ratio (C_{F}/C_{R}) of the Pd content, the shorter the 50% CO purification time and the quicker the NO storage start time became. As shown in FIG. 6, a positive correlation was observed between the 50% CO purification time and the NO storage start time. As can be seen from these results, in a lean atmosphere, the CO purification reaction was accelerated by increasing the Pd content in the lower-layer front portion, and as a result, the NO oxidation reaction occurred more easily. Therefore, the catalyst for exhaust gas purification disclosed herein can reduce NOₓ emissions, especially when starting an internal combustion engine.

### [Test Example II: Evaluation of NOₓ purification performance in rich atmosphere]

In Test Example II, a NOₓ purification rate in a rich atmosphere (A/F = 14.45) was evaluated for the catalysts for exhaust gas purification of Examples 1 to 5, in which the NOₓ storage start time was 40s or less in Test Example I.

### <Evaluation of NOₓ Purification Rate in Rich Atmosphere>

The catalysts for exhaust gas purification of each Example was installed in the exhaust pipe of the engine bench, and exhaust gas, the temperature of which was adjusted to 460°C by a heat exchanger, was allowed to flow into the catalyst for exhaust gas purification. At this time, the A/F of the exhaust gas having flowed in was varied, and the amount of NOₓ before the catalyst inflow and the amount of NOₓ after the catalyst outflow were measured when A/F = 14.45. Based on these measurements, the NOₓ purification rate (%) in a rich atmosphere (A/F = 14.45) was calculated. The results are shown in Table 5.

### [Table 5]

**Table 5**

| | Lower layer | | | Evaluation results |
|---|---|---|---|---|
| | Pd C_{F}(g/L) | Pd C_{R} (g/L) | C_{F}/C_{R} | NO_{X} purification rate [%] 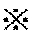 |
| Example 1 | 2.46 | 1.64 | 1.5 | 94 |
| Example 2 | 2.83 | 1.42 | 2 | 94.5 |
| Example 3 | 3.11 | 1.25 | 2.5 | 92 |
| Example 4 | 3.33 | 1.11 | 3 | 90.5 |
| Example 5 | 3.51 | 1.00 | 3.5 | 89 |

| | | | | |
|---|---|---|---|---|
| *Rich atmosphere (A/F=14.45) | | | | |

As shown in Table 5, the NOₓ purification rate in the rich atmosphere became lowest when the ratio (C_{F}/C_{R}) of the Pd content was 3.5. This is thought to be because the Pd content in the lower-layer front portion was extremely large, which allowed NOₓ that had not fully reacted in the rich atmosphere to pass through the catalyst for exhaust gas purification and be emitted.

Meanwhile, when the ratio (C_{F}/C_{R}) of the Pd content was in the range from 1.5 to 3, the NOₓ purification rate was high, for example, 90% or more. In particular, when the ratio (C_{F}/C_{R}) of the Pd content was in the range from 1.5 to 2.5, the NOₓ purification rate was 92% or more, whereas when the ratio (C_{F}/C_{R}) of Pd content was in the range from 1.5 to 2, the NOₓ purification rate was remarkably high, for example, 94% or more. As can be seen from these results, setting the ratio (C_{F}/C_{R}) of the Pd content in the above range can improve the NOₓ purification performance in a rich atmosphere, as well as the NOₓ storage performance in a lean atmosphere.

### [Test Example III: Consideration of the total amount of Pd and NOₓ storage performance]

In Test Example III, the NOₓ storage performance was evaluated when the total amount of Pd in the lower layer was changed, with the ratio (C_{F}/C_{R}) of the Pd content fixed at 1.5, i.e., (C_{F}/C_{R}) = 1.5, where both NOₓ storage performance in a lean atmosphere and NOₓ purification performance in a rich atmosphere were excellent. Specifically, catalysts for exhaust gas purification in Examples 6 to 8 were fabricated in the same way as in Example 1 of Test Example I, except that the Pd contents in the lower-layer front portion and the lower-layer rear portion were changed as shown in Table 6, and the 50% CO purification achievement time and the NOₓ storage start time of these catalysts were evaluated in the lean atmosphere. The 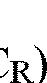 results are shown in Table 6.

### [Table 6]

**Table 6**

| | Lower layer | | | | Evaluation Results | |
|---|---|---|---|---|---|---|
| | Pd total amount [g/L] | Pd C_{F}(g/L) | Pd C_{R} (g/L) | C_{F}/C_{R} | 50% CO purification time [s} | NO_{X} storage start time [s] |
| Example 6 | 2.1 | 2.10 | 1.40 | | 43.6 | 43 |
| Example 1 | 2.45 | 2.46 | 1.64 | 1.5 | 42.4 | 40 |
| Example 7 | 2.9 | 2.91 | 1.94 | | 41.2 | 38 |
| Example 8 | 3.6 | 3.68 | 2.45 | | 41 | 38 |

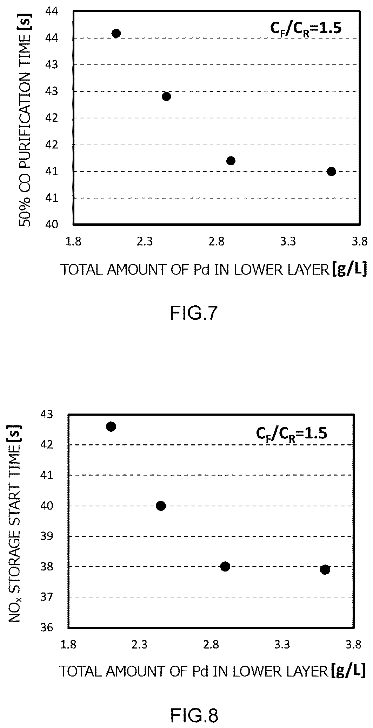

FIG. 7 shows the relationship between the total amount of Pd in the lower layer and the 50% CO purification time. FIG. 8 shows the relationship between the total amount of Pd in the lower layer and the NO storage start time. As shown in Table 6 and FIGS. 7 and 8, with the ratio (C_{F}/C_{R}) of the Pd content being set to 1.5, i.e., (C_{F}/C_{R}) = 1.5, after the total amount of Pd in the lower layer exceeds approximately 3, specifically, 2.9, the effects of the technology disclosed herein are reduced to reach their limits. This is thought to be because when the amount of Pd used is significant, the lower-layer front portion contains a sufficient amount of Pd. Therefore, it is found that the effects of the technology disclosed herein are demonstrated at a particularly high level when the total amount of Pd in the lower layer is 3.0 g/L or less, even 2.9 g/L or less, or 2.5 g/L or less.

The above is a detailed description of the specific examples of the present disclosure, but these are illustrative only and do not limit the scope of the claims. The technology described in the claims includes various modifications and changes of the specific examples exemplified above.

### [Reference Signs List]

- 10, 110: Substrate

- 12: Cell
- 14: Rib wall
- 20: Catalyst layer
- 22, 122: Lower layer
- 22a, 122a: Lower-layer front portion
- 22b, 122b: Lower-layer rear portion
- 24: Middle layer
- 26: Upper layer
- 100: Catalyst for exhaust gas purification

## Claims

1. A catalyst (100) for exhaust gas purification that is suitable for purifying exhaust gas emitted from an internal combustion engine, the catalyst (100) being disposed in an exhaust passage of the internal combustion engine, the catalyst (100) comprising:
a substrate (10); and
a catalyst layer (20) formed on the substrate (10), wherein
the catalyst layer (20) comprises: a lower layer (22) located on a side of the substrate (10); an upper layer (26) located on a surface layer side; and a middle layer (24) located between the lower layer (22) and the upper layer (26),
the upper layer (26) contains Rh,
the middle layer (24) contains at least Pt and a NOₓ storage material,
the lower layer (22) includes a lower-layer front portion (22a) located on an upstream side (X1) in a flow direction (F) of the exhaust gas and a lower-layer rear portion (22b) located on a downstream side (X2) in the flow direction (F) of the exhaust gas, when the catalyst (100) is disposed in the exhaust passage,
the lower-layer front portion (22a) and the lower-layer rear portion (22b) each contain Pd, and
a Pd content (C_{F}) in the lower-layer front portion (22a) per L of the substrate (10) is greater than a Pd content (C_{R}) in the lower-layer rear portion (22b) per L of the substrate (10).

2. The catalyst (100) for exhaust gas purification according to claim 1, wherein a ratio (C_{F}/C_{R}) of the C_{F} to the C_{R} satisfies the following formula: 1.5 ≤ (C_{F}/C_{R}) ≤ 3.0.

3. The catalyst (100) for exhaust gas purification according to claim 1 or 2, wherein a total amount of the Pd in the entire lower layer (22) per L of the substrate (10) is 3.0 g/L or less.

4. The catalyst (100) for exhaust gas purification according to any one of claims 1 to 3, wherein
the lower-layer front portion (22a) and the lower-layer rear portion (22b) each contain an OSC material having an oxygen storage capacity and a non-OSC material having no oxygen storage capacity,
a content of the non-OSC material in the lower-layer front portion (22a) per L of the substrate (10) is greater than a content of the non-OSC material in the lower-layer rear portion (22b) per L of the substrate (10), and
a content of the OSC material in the lower-layer front portion (22a) per L of the substrate (10) is smaller than a content of the OSC material in the lower-layer rear portion (22b) per L of the substrate (10).

5. The catalyst (100) for exhaust gas purification according to any one of claims 1 to 4, wherein a coating length (La) of the lower-layer front portion (22a) in the flow direction (F) of the exhaust gas is shorter than a coating length (Lb) of the lower-layer rear portion (22b) in the flow direction (F) of the exhaust gas.

6. The catalyst (100) for exhaust gas purification according to any one of claims 1 to 5, wherein
the coating length (La) of the lower-layer front portion (22a) in the flow direction (F) of the exhaust gas is 30% or more and 60% or less of an entire length (L) of the substrate (10), and
the coating length (Lb) of the lower-layer rear portion (22b) in the flow direction (F) of the exhaust gas is 60% or more and 90% or less of the entire length (L) of the substrate (10).

## Patentansprüche

1. Katalysator (100) zur Abgasreinigung, der zum Reinigen von Abgas, das durch eine Brennkraftmaschine ausgestoßen wird, geeignet ist, welcher Katalysator (100) in einem Abgasdurchgang der Brennkraftmaschine angeordnet ist, welcher Katalysator (100) aufweist:
ein Substrat (10); und
eine Katalysatorschicht (20), die auf dem Substrat (10) ausgebildet ist, bei dem die Katalysatorschicht (20) eine untere Schicht (22), die sich auf einer Seite des Substrats (10) befindet, eine obere Schicht (26), die sich auf einer Oberflächenschichtseite befindet, und eine mittlere Schicht (24), die sich zwischen der unteren Schicht (22) und der oberen Schicht (26) befindet, aufweist,
die obere Schicht (26) Rh enthält,
die mittlere Schicht (24) mindestens Pt und ein NOₓ-Speichermaterial enthält,
die untere Schicht (22) einen vorderen Abschnitt der unteren Schicht (22a), der sich auf einer stromaufwärtigen Seite (X1) in einer Strömungsrichtung (F) des Abgases befindet, und einen hinteren Abschnitt der unteren Schicht (22b), der sich auf einer strömabwärtigen Seite (X2) in der Strömungsrichtung (F) des Abgases befindet, wenn der Katalysator (100) in dem Abgasdurchgang angeordnet ist, aufweist,
der vordere Abschnitt der unteren Schicht (22a) und der hintere Abschnitt der unteren Schicht (22b) jeweils Pd enthalten, und
ein Pd-Gehalt (C_{F}) in dem vorderen Abschnitt der unteren Schicht (22a) pro L des Substrats (10) größer ist als ein Pd-Gehalt (C_{R}) in dem hinteren Abschnitt der unteren Schicht (22b) pro L des Substrats (10).

2. Katalysator (100) zur Abgasreinigung nach Anspruch 1, bei dem ein Verhältnis (C_{F}/C_{R}) des C_{F} zu dem C_{R} die folgende Formel erfüllt: 1,5 ≤ (C_{F}/C_{R}) ≤ 3,0.

3. Katalysator (100) zur Abgasreinigung nach Anspruch 1 oder 2, bei dem eine Gesamtmenge des Pd in der gesamten unteren Schicht (22) pro L des Substrats (10) 3,0 g/L oder weniger ist.

4. Katalysator (100) zur Abgasreinigung nach einem der Ansprüche 1 bis 3, bei dem der vordere Abschnitt der unteren Schicht (22a) und der hintere Abschnitt der unteren Schicht (22b) jeweils ein OSC-Material, das eine Sauerstoffspeicherkapazität aufweist, und ein Nicht-OSC-Material, das keine Sauerstoffspeicherkapazität aufweist, aufweisen,
ein Gehalt des Nicht-OSC-Materials in dem vorderen Abschnitt der unteren Schicht (22a) pro L des Substrats (10) größer ist als ein Gehalt des Nicht-OSC-Materials in dem hinteren Abschnitt der unteren Schicht (22b) pro L des Substrats (10), und
ein Gehalt des OSC-Materials in dem vorderen Abschnitt der unteren Schicht (22a) pro L des Substrats (10) kleiner ist als ein Gehalt des OSC-Materials in dem hinteren Abschnitt der unteren Schicht (22b) pro L des Substrats (10).

5. Katalysator (100) zur Abgasreinigung nach einem der Ansprüche 1 bis 4, bei dem eine Beschichtungslänge (La) des vorderen Abschnitts der unteren Schicht (22a) in der Strömungsrichtung (F) des Abgases kürzer ist als eine Beschichtungslänge (Lb) des hinteren Abschnitts der unteren Schicht (22b) in der Strömungsrichtung (F) des Abgases.

6. Katalysator (100) zur Abgasreinigung nach einem der Ansprüche 1 bis 5, bei dem die Beschichtungslänge (La) des vorderen Abschnitts der unteren Schicht (22a) in der Strömungsrichtung (F) des Abgases 30% oder mehr und 60% oder weniger einer Gesamtlänge (L) des Substrats (10) ist, und
die Beschichtungslänge (Lb) des hinteren Abschnitts der unteren Schicht (22b) in der Strömungsrichtung (F) des Abgases 60% oder mehr und 90% oder weniger der Gesamtlänge (L) des Substrats (10) ist.

## Revendications

1. Catalyseur (100) pour l'épuration de gaz d'échappement, adapté à l'épuration de gaz d'échappement émis par un moteur à combustion interne, le catalyseur (100) étant disposé dans un passage d'échappement du moteur à combustion interne, le catalyseur (100) comprenant :
un substrat (10) ; et
une couche de catalyseur (20) formée sur le substrat (10), dans lequel
la couche de catalyseur (20) comprend : une couche inférieure (22) située sur un côté du substrat (10) ; une couche supérieure (26) située sur un côté de la couche superficielle ; et une couche intermédiaire (24) située entre la couche inférieure (22) et la couche supérieure (26),
la couche supérieure (26) contient du Rh,
la couche intermédiaire (24) contient au moins du Pt et un matériau de stockage de NOₓ,
la couche inférieure (22) comprend une partie avant de couche inférieure (22a) située sur un côté amont (X1) dans une direction d'écoulement (F) des gaz d'échappement et une partie arrière de couche inférieure (22b) située sur un côté aval (X2) dans la direction d'écoulement (F) des gaz d'échappement, lorsque le catalyseur (100) est disposé dans le passage d'échappement,
la partie avant de couche inférieure (22a) et la partie arrière de couche inférieure (22b) contiennent chacune du Pd, et
une teneur en Pd (C_{F}) dans la partie avant de couche inférieure (22a) par litre de substrat (10) est supérieure à une teneur en Pd (C_{R}) dans la partie arrière de la couche inférieure (22b) par litre de substrat (10).

2. Catalyseur (100) pour l'épuration de gaz d'échappement selon la revendication 1, dans lequel un rapport (C_{F} /C_{R}) entre C_{F} et C_{R} satisfait à la formule suivante : 1,5 ≤ (C_{F} /C_{R}) ≤ 3,0.

3. Catalyseur (100) pour l'épuration de gaz d'échappement selon la revendication 1 ou 2, dans lequel la quantité totale de Pd dans toute la couche inférieure (22) par litre de substrat (10) est inférieure ou égale à 3,0 g/L.

4. Catalyseur (100) pour l'épuration de gaz d'échappement selon l'une quelconque des revendications 1 à 3, dans lequel
la partie avant de la couche inférieure (22a) et la partie arrière de la couche inférieure (22b) contiennent chacune un matériau OSC ayant une capacité de stockage d'oxygène et un matériau non OSC n'ayant pas de capacité de stockage d'oxygène,
une teneur en matériau non OSC dans la partie avant de la couche inférieure (22a) par litre de substrat (10) est supérieure à la teneur en matériau non OSC dans la partie arrière de la couche inférieure (22b) par litre de substrat (10), et
une teneur en matériau OSC dans la partie avant de la couche inférieure (22a) par litre de substrat (10) est inférieure à la teneur en matériau OSC dans la partie arrière de la couche inférieure (22b) par litre de substrat (10).

5. Catalyseur (100) pour l'épuration de gaz d'échappement selon l'une quelconque des revendications 1 à 4, dans lequel une longueur de revêtement (La) de la partie avant de la couche inférieure (22a) dans la direction d'écoulement (F) des gaz d'échappement est plus courte qu'une longueur de revêtement (Lb) de la partie arrière de la couche inférieure (22b) dans la direction d'écoulement (F) des gaz d'échappement.

6. Catalyseur (100) pour l'épuration de gaz d'échappement selon l'une quelconque des revendications 1 à 5, dans lequel
la longueur de revêtement (La) de la partie avant de la couche inférieure (22a) dans la direction d'écoulement (F) des gaz d'échappement est comprise entre 30 % et 60 % de la longueur totale (L) du substrat (10), et
la longueur de revêtement (Lb) de la partie arrière de la couche inférieure (22b) dans la direction d'écoulement (F) des gaz d'échappement est comprise entre 60 % et 90 % de la longueur totale (L) du substrat (10).
